# DEMANDE DE BREVET EUROPEEN

(11) **EP 0 570 288 A1**
(43) Date de publication de la demande: **18.11.1993**
(21) Numéro de dépôt: 93401223.8
(22) Date de dépôt: 13.05.1993
(51) Int. Cl.: B60H 1/00, B60H 3/06

(54) **Dispositif de ventilation de l'habitacle d'un véhicule**

(30) Priorité: 14.05.1992 FR 9205872
(71) Demandeur: VALEO THERMIQUE HABITACLE, 78320 Le Mesnil-Saint-Denis (FR)
(72) Inventeur: Dauvergne, Jean, F-95470 Fosses (FR)
(74) Mandataire: Gamonal, Didier

(57) **Abrégé**

Le dispositif de ventilation de l'habitacle d'un véhicule comprend un groupe moto-ventilateur (13) pour produire un courant d'air de ventilation, des moyens (18) de sélection de la vitesse souhaitée pour le courant d'air et des moyens de commande (16) pour régler la vitesse du ventilateur en fonction de ladite vitesse souhaitée, ainsi qu'un capteur de vitesse réelle (15) agissant sur les moyens de commande de façon à permettre une augmentation de la vitesse du ventilateur pour compenser un écart entre la vitesse réelle et la vitesse souhaitée.

## Description

L'invention concerne un dispositif de ventilation de l'habitacle d'un véhicule, comprenant un ventilateur pour produire un courant d'air de ventilation, des moyens de sélection de la vitesse souhaitée pour le courant d'air et des moyens de commande pour régler la vitesse du ventilateur en fonction de ladite vitesse souhaitée.

On appelle ici dispositif de ventilation tout dispositif propre à envoyer un courant d'air dans l'habitacle du véhicule, ce qui inclut notamment les dispositifs de chauffage et les dispositifs de climatisation qui sont en outre propres à agir sur la température de ce courant d'air.

Il existe différents moyens qui visent à maintenir la vitesse de l'air soufflé à l'intérieur de l'habitacle de manière à ce que le niveau de confort choisi soit toujours atteint.

Habituellement ces moyens ne prennent pas en compte les variations de la vitesse de l'air résultant du fonctionnement du ventilateur associé aux variations de vitesse du véhicule.

De plus, dans ces dispositifs de ventilation, il est souhaitable de mettre en place un filtre pour éliminer du courant d'air les poussières et/ou les substances malodorantes ou polluantes. A mesure que des particules sont retenues par le filtre, la résistance de celui-ci au passage de l'air s'accroît, ce qui entraîne, toutes choses égales par ailleurs, une diminution de la vitesse du courant d'air.

Lorsque le dispositif comporte un réglage manuel de la vitesse du ventilateur, soit en continu, soit par paliers, l'utilisateur peut compenser la baisse de la vitesse due à l'encrassement du filtre par une augmentation de la vitesse du ventilateur.

Le but de l'invention est de décharger l'utilisateur de cette intervention, et de permettre cette compensation également en l'absence de réglage manuel de la vitesse du ventilateur, notamment lorsque cette vitesse est réglée automatiquement selon un programme.

A cet effet, selon l'invention le dispositif du genre défini en introduction comprend en outre un capteur de vitesse réelle de l'air agissant sur les moyens de commande de façon à permettre une augmentation de la vitesse du ventilateur pour compenser un écart entre la vitesse réelle et la vitesse souhaitée de l'air.

Des caractéristiques optionnelles avantageuses du dispositif selon l'invention sont énoncées ci-après :
- Il comprend en outre, dans le cas de l'utilisation d'un filtre, des moyens de signalisation propres à fournir un signal perceptible par le conducteur du véhicule lorsque le débit souhaité ne peut être obtenu par suite du colmatage du filtre. Ce signal indique que la plage de variation de vitesse prévue pour compenser l'encrassement du filtre a été entièrement utilisée, et que le filtre doit être nettoyé ou remplacé.
- Les moyens de signalisation sont propres à produire ledit signal lorsque la vitesse réelle est restée inférieure à la vitesse souhaitée pendant une durée déterminée.
- Ledit capteur de vitesse est placé dans le courant d'air du même côté que le filtre par rapport au ventilateur et fournit un signal représentatif de la pression de l'air.
- Le ventilateur, le capteur et le filtre sont disposés dans cet ordre dans le sens du courant d'air.

D'autres caractéristiques et avantages de l'invention apparaîtront à l'examen de la description détaillée ci-après, et des dessins annexés, sur lesquels :
- la figure 1 est une représentation schématique d'un dispositif de ventilation selon l'invention ; et
- la figure 2 est un schéma fonctionnel de la commande de vitesse du ventilateur dans le dispositif de la figure 1.

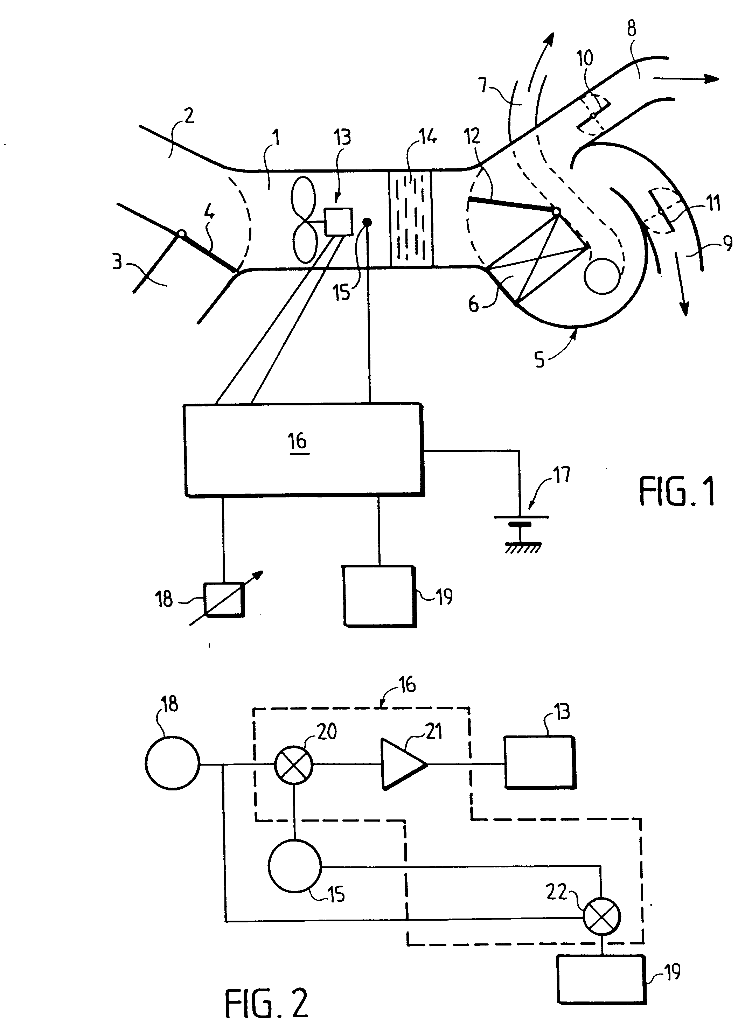

Le dispositif illustré à la figure 1,utilisé pour la ventilation et le chauffage de l'habitacle d'un véhicule automobile, définit un circuit d'air comportant un tronc commun 1 relié à son extrémité amont à une entrée d'air extérieur 2 et à une entrée d'air recirculé 3, un volet de recirculation 4 pouvant être déplacé de façon à faire pénétrer dans le tronc 1 de l'air extérieur et/ou de l'air recirculé. A son extrémité aval, le tronc commun 1 débouche dans un ensemble de chauffage et de distribution 5 comprenant un radiateur de chauffage d'air 6, une sortie d'air vers le pare-brise 7, des sorties d'air 8 et 9 vers la partie haute et la partie basse de l'habitacle, munies de volets de réglage respectifs 10 et 11, et un volet 12 pour le réglage de la fraction du débit d'air traversant le radiateur 6. Dans le tronc 1 sont disposés un groupe moto-ventilateur 13 assurant une circulation d'air dans le circuit, et, en aval de celui-ci, un filtre 14 destiné à éliminer les poussières et/ou les substances malodorantes ou polluantes.

Selon l'invention, un capteur 15 du type capteur de vitesse d'air, disposé entre le groupe moto-ventilateur et le filtre, est relié à un circuit de commande 16 commandant l'alimentation électrique du groupe moto-ventilateur 13 à partir de la batterie 17 du véhicule. Le circuit de commande 16 est également relié à un organe de sélection 18 permettant de choisir la vitesse d'air souhaitée dans le tronc 1, et par conséquent sur l'ensemble des sorties 7, 8 et 9, et un organe de signalisation 19, par exemple un voyant lumineux, destiné à indiquer le cas échéant que le débit souhaité ne peut être obtenu par suite du colmatage du filtre 14.

Comme montré à la figure 2, le circuit de commande 16 comprend un premier comparateur 20 qui compare le signal produit par le capteur 15 à un signal de consigne provenant du sélecteur 18. Ce dernier peut être un organe de réglage manuel de vitesse, ou faire partie d'un ensemble de programmation qui définit la vitesse d'air à réaliser en fonction de différents paramètres.

A une vitesse donnée correspond, pour une perte de charge normale à travers le filtre, une valeur déterminée de la vitesse détectée par le capteur 15. Si la perte de charge augmente par suite de l'encrassement du filtre, il en résulte, pour une même vitesse du groupe moto-ventilateur, une diminution de la vitesse d'air. Cet écart est détecté par le comparateur 20, qui, par l'intermédiaire d'un amplificateur 21, provoque une augmentation de la tension d'alimentation du groupe moto-ventilateur 13. Un second comparateur temporisé 22 compare également les signaux du capteur 15 et du sélecteur 18. Lorsque la vitesse réelle, représentée par le signal du capteur 15, reste inférieure à la vitesse souhaitée pendant une période donnée, comprise par exemple entre 10 et 30 secondes, le comparateur 22 provoque l'émission d'un signal par l'organe d'affichage 19, indiquant au conducteur du véhicule que le filtre est colmaté et doit être nettoyé ou remplacé.

## Revendications

1. Dispositif de ventilation de l'habitacle d'un véhicule, comprenant un groupe moto-ventilateur (13) pour produire un courant d'air de ventilation à différentes vitesses, des moyens (18) de sélection de la vitesse souhaitée pour le courant d'air et des moyens de commande (16) pour régler la vitesse du groupe moto-ventilateur en fonction de ladite vitesse souhaitée, caractérisé en ce qu'il comprend en outre un capteur de vitesse réelle de l'air (15) agissant sur les moyens de commande de façon à permettre une augmentation de la vitesse du ventilateur pour compenser un écart entre la vitesse réelle et la vitesse souhaitée de l'air.

2. Dispositif selon la revendication 1, dans lequel un filtre (14) est interposé dans le courant d'air, caractérisé en ce qu'il comprend en outre des moyens de signalisation (19) propres à fournir un signal perceptible par le conducteur du véhicule lorsque la vitesse souhaitée ne peut être obtenu par suite du colmatage du filtre.

3. Dispositif selon la revendication 2, caractérisé en ce que les moyens de signalisation sont propres à produire ledit signal lorsque la vitesse réelle est restée inférieure à la vitesse souhaitée pendant une durée déterminée.

4. Dispositif selon l'une des revendications précédentes, caractérisé en ce que ledit capteur de vitesse est placé dans le courant d'air du même côté que le filtre par rapport au ventilateur et fournit un signal représentatif de la vitesse de l'air.

5. Dispositif selon la revendication 4, caractérisé en ce que le ventilateur, le capteur et le filtre sont disposés dans cet ordre dans le sens du courant d'air.
